# EUROPEAN PATENT SPECIFICATION

(11) **EP 0 552 873 B1**
(45) Date of publication and mention of the grant of the patent: **08.08.2001**
(21) Application number: 93300118.2
(22) Date of filing: 08.01.1993
(51) Int. Cl.: G06F 13/40

(54) **Modifying system configuration in a computer system**
Systemkonfigurationsänderung in einem Rechnersystem
Modification de la configuration système dans un système d'ordinateur

(30) Priority: 20.01.1992 JP 752792
(43) Date of publication of application: 28.07.1993
(73) Proprietor: International Business Machines Corporation, Armonk, N.Y. 10504 (US)
(72) Inventor: Yeong-Chang, Lien, New York 10510 (US); Sone, Hironao, Yokohama-shi, Kanagawa-ken (JP); Sekiya, Kazuo, Tokyo (JP); Kanada, Yoshihisa, Tokyo (JP)
(74) Representative: Burt, Roger James, Dr.

(56) References cited:
- EP-A- 0 373 773
- EP-A- 0 403 117
- EP-A- 0 490 373
- IBM TECHNICAL DISCLOSURE BULLETIN. vol. 29, no. 3, August 1986, NEW YORK US pages 1060 - 1062 'Control circuit for hot plugging a ROS cartridge'

## Description

This invention relates to computer systems such as personal computers or workstations, and more particularly, to computer systems the system configuration of which can be modified by use of adapters.

Modifying the configuration of a system unit such as a personal computer by using adapters has been extensively employed. However, in the conventional approach, an adapter is defined as a static or fixed resource so that the system configuration cannot be modified while the personal computer is in operation or powered.

In a conventional system, a power-on reset procedure takes place when a system power supply is turned on. All hardware is reset, and then diagnosis of system resources is conducted for checking the CPU, memories and the like. At the same time, adapters are also checked.

The system stores in a nonvolatile memory (or the like) information on the type of adapters mounted in the system, and generally checks the adapters based on the information stored in the memory. When the configuration of the adapters needs to be modified, the usual procedure is to turn off the power supply of the system once, and to run an automatic setup program for reconfiguration of the system so as to enable it to install device drivers by assigning I/O addresses, memory addresses, interrupt levels and the like. If there is no automatic setup program, or if setting cannot be performed with the automatic setup program, a system administrator has to manually set such settings by using dip switches or the like. Thus, changing of an adapter imposes a significant burden on the user.

Usually, with desk top personal computers or floor standing personal computers, there is no need to connect external adapters to the computers while the computers are running. Conventional computers have enough slots or ports that a user can attach required adapters to the computers before using. Further, conventional computers are not used with a large variety of adapters, i.e. they are used with typical adapters, such as printers, monitors, external DSDs, scanners, all of which are usually connected before using. Accordingly there is little need to connect an adapter to the conventional system during the operation of the system.

However, compact computers, such as the notebook type, do not have many slots. The slots are shared by a plurality of adapters. For example, one time a slot may hold a printer adapter, another time it may hold an audio device adapter, or a scanner adapter. Further, future developments will require a large variety of adapters to be used, so there will be a need to replace adapters frequently. Further, such requirements will be needed while the system runs the OS or application program. This requirement had up to now not been recognised.

Japanese Published Unexamined Patent Application (JPUPA) No. 60-10481, JPUPA No. 62-27841, and Japanese Published Unexamined Utility Model Application 61-143224 disclose how to prevent an adapter or a system from damage or malfunctioning when inserting or removing an adapter. PUPA No. 63-234488 relates to printers and discloses how to detect insertion or removal of an adapter, and how to change over processing in a printer to correspond to the adapter by utilizing an identification signal of the adapter upon detection of insertion. However, it does not suggest any modification of information in the system configuration of a computer. In addition, when resetting is necessary, it is performed by the insertion or removal of the adapter. Furthermore, PUPA No. 59-154521 discloses on-line reconfiguration of system configuration.

EP 0403117 discloses a computer system having different types of slots. A board can be plugged into a slot. The board has special circuitry to permit the board to customize itself to the particular slot to which it is inserted.

However, all of the above embodiments fail to suggest automatic modification of the system configuration information without intervention of the user when an adapter is inserted or removed, along with installation of the necessary device driver, if any, so as to reconfigure the system.

It is an object of the present invention to provide a computer system which allows insertion or removal of an adapter in the system running state, and wherein the system is automatically reconfigured in accordance with insertion or removal of adapters.

It should be noted that the phrase "system running state" as used herein means not only the state where the operating system indicates a prompt for a command, but also the state where an application program is operating.

Accordingly, the present invention provides a computer system having one or more slots for receiving and holding one or more adapter cartridges, the system being characterised by: each adapter cartridge being provided with a storage section for storing attribute information; communication means for exchanging predetermined information with said adapter cartridge in response to insertion or removal of said adapter cartridge to or from said slot; and modifying means for modifying system configuration information of the system based on said attribute information stored in said adapter cartridge.

Preferably the system is provided with an adapter detection mechanism that detects insertion or removal of an adapter cartridge (all adapters for a computer including simple adapters for memory and adapters for peripheral device such as communication adapters). In the preferred embodiment the computer system further has means for electrically and mechanically connecting or separating the adapter, and a means for monitoring the running state of the adapter cartridge when it is attempted to insert or remove it, so that the adapter can be inserted or removed while the computer system is running. Hereafter the means for monitoring the running state of the adapter cartridge will be referred to as a resource manager.

In preferred embodiments, when the adapter is inserted, the adapter detection mechanism informs this fact to the resource manager with an interrupt or the like. The resource manager mechanically and electrically connects the adapter to the system immediately after insertion of the adapter, performs the necessary setup, inclusion of the device driver, which the system requires, and assignment of memories or the like by reading the adapter attribute information from the memory on the adapter. It then allows an application program to use the adapter.

In preferred embodiments, when the user wants to remove the adapter, he or she press an adapter remove button or issues a remove request to the resource manager. This request is transferred to the resource manager, which then checks the running state of the adapter, and, if it can be removed, allows it to be removed by disconnecting it first electrically and then mechanically. The user of the computer system can remove the adapter after it is disconnected. If data is being written to a device such as a hard disk, the remove request is suspended until the adapter becomes non-operational. At the same time as the adapter is removed, the device driver, if it is included, is informed of the fact that the device is disabled. Then, even if there is a request for the device, the device driver returns a reply that there is no such device; alternatively the device driver itself is removed.

The present invention has the advantage that the configuration of a system such as a personal computer can be modifiable by inserting or removing an adapter while supplying power to or running the system. This is particularly advantageous for the portable personal computers that are recently emerging for which, because they have a fewer number of adapter slots in view of space, the configuration should be freely modifiable for the applications being used.

Currently with prior art systems, when a user adds a new adapter, the user sets up configuration information by using a set-up diskette which is provided with the adapter. In other words the user has to perform some action to run the set-up program, such as entering the diskette into the floppy disk and hitting some key.

According to the present invention, there is no need to do anything other than entering the adapter card in the slot. When the adapter card is entered into the slot, the program then running is interrupted, and a set-up program is invoked to make enquiries with the adapter and to modify the system configuration information. It further manipulates device drivers, after which the control is returned to the program which was running before the interruption, and the program resumes running.

The present invention will be described further, by way of example only, with reference to an embodiment thereof, as illustrated in the accompanying drawings, in which:
Figure 1 is a perspective view showing the appearance of a preferred embodiment of this invention, and its state in use;
Figure 2 is a block diagram showing the internal configuration of the embodiment;
Figure 3 is a diagram illustrating the connection area of an adapter in accordance with the preferred embodiment;
Figure 4 is a further diagram illustrating the connection area of an adapter in accordance with the preferred embodiment;
Figure 5 is a diagram illustrating a software configuration for the preferred embodiment;
Figure 6 is a diagram illustrating system configuration information for the preferred embodiment;
Figure 7 is a flowchart illustrating operation of the preferred embodiment when inserting an adapter;
Figure 8 is a flowchart illustrating operation of the preferred embodiment when removing the adapter;
Figure 9 is a perspective view illustrating a modification of the preferred embodiment;
Figure 10 is a diagram illustrating a second modification of the preferred embodiment;
Figure 11 is a diagram further illustrating said the second modification of the preferred embodiment.

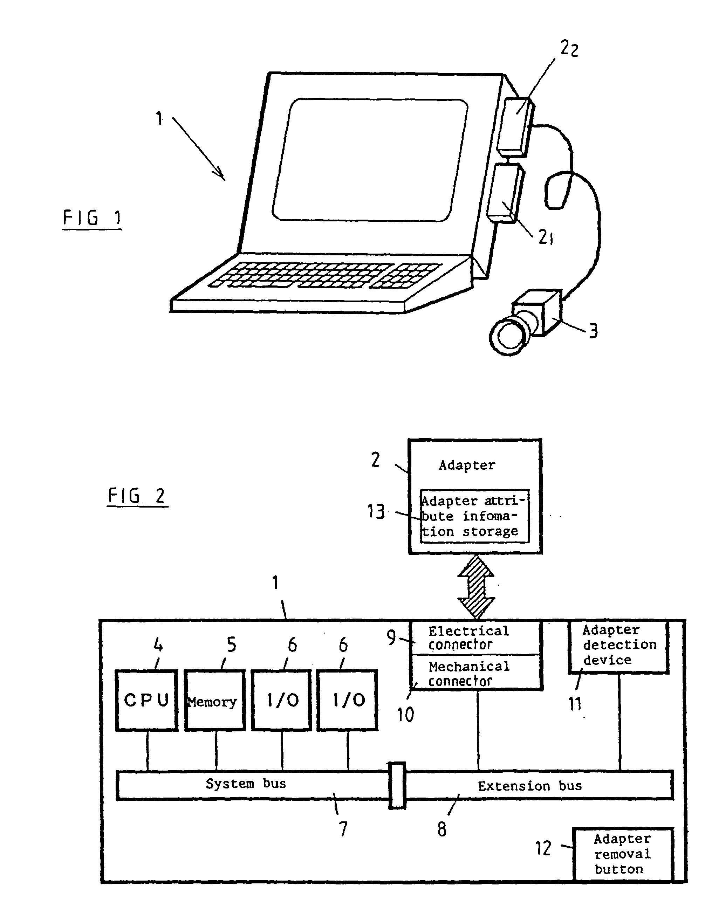

Figure 1 shows the appearance of a preferred embodiment of the present invention in use. In the figure, a memory adapter 21 and a video camera adapter 22 are inserted into slots (not shown in the figure) of a portable computer 1. The video camera adapter 22 is attached to a video camera 3. The portable computer 1 has two slots for adapters. These slots are general purpose, and can attach to various adapters such as communication adapters, in addition to the memory adapter 21 and the video camera adapter 22.

Figure 2 shows an example of the internal configuration of the computer 1 and adapter 2. In the figure, a CPU 4, a memory 5, and an I/O device 6 such as the keyboard of the computer 1 are attached to a system bus 7. Attached to an expansion bus 8, which is connected to the system bus 7, are an electrical connector 9, a mechanical connector 10 and an adapter detection device 11. An adapter removal button 12 is provided near the slot. The adapter 2 has an adapter attribute information storage 13 in addition to a functional block for its application (for example, a memory block in the case of memory adapter, which is not shown). The adapter attribute information storage 13 stores adapter IDs and other information.

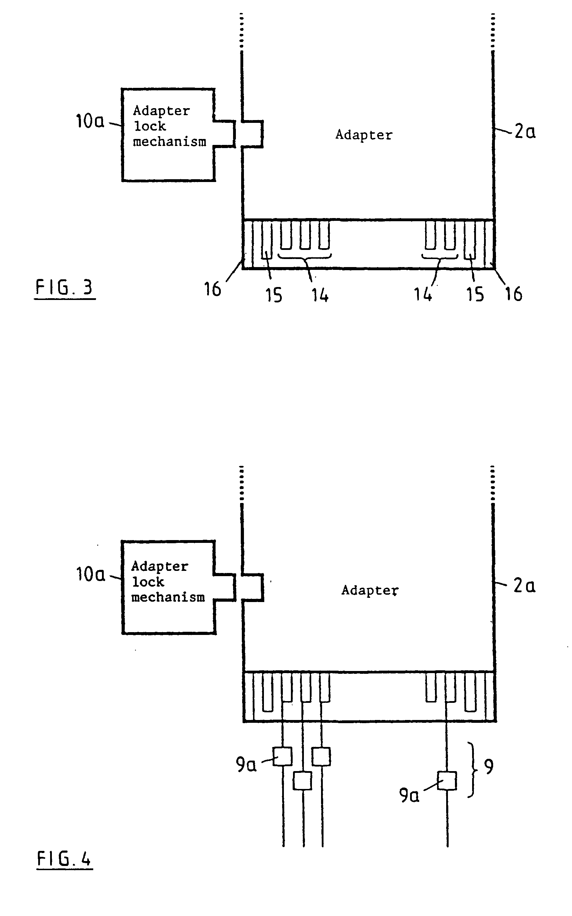

Figure 3 shows the connection area 2a of the adapter 2 in Figure 2. This connection area 2a is inserted into the slot of the portable computer 1. The connection area 2a has a signal line 14, a power supply line 15, and an adapter detection line 16 at its end. When the connection area 2a of the adapter 2 is inserted into the slot, the adapter detection device 11 (Figure 2) detects the insertion of the adapter 2 by utilizing the adapter detection line 16. In response to this, the mechanical connector 10 of the portable computer 1 (Figure 2) mechanically connects the adapter 2 to the portable computer 1 by driving an adapter lock mechanism 10a.

Figure 4 shows the arrangement of the electrical connector 9 in Figure 2. In the figure, a switch 9a of the electrical connector 9 is designed to control the connection between the signal line of the adapter 2 and a signal line of the portable computer 1.

When the user presses the adapter removal button 12 to remove the adapter, the electrical connector 9 and the mechanical connector 10 are controlled to shut down electrical connection and to release the lock of the adapter lock mechanism 10a.

Although Figure 2 shows only one set of the electrical connector 9, the mechanical connector 10, the adapter detection device 11, and the adapter removal button 12, two sets may be provided when two slots are provided, as in the preferred embodiment. If the number of slots are further increased, it is sufficient to provide the corresponding number of sets.

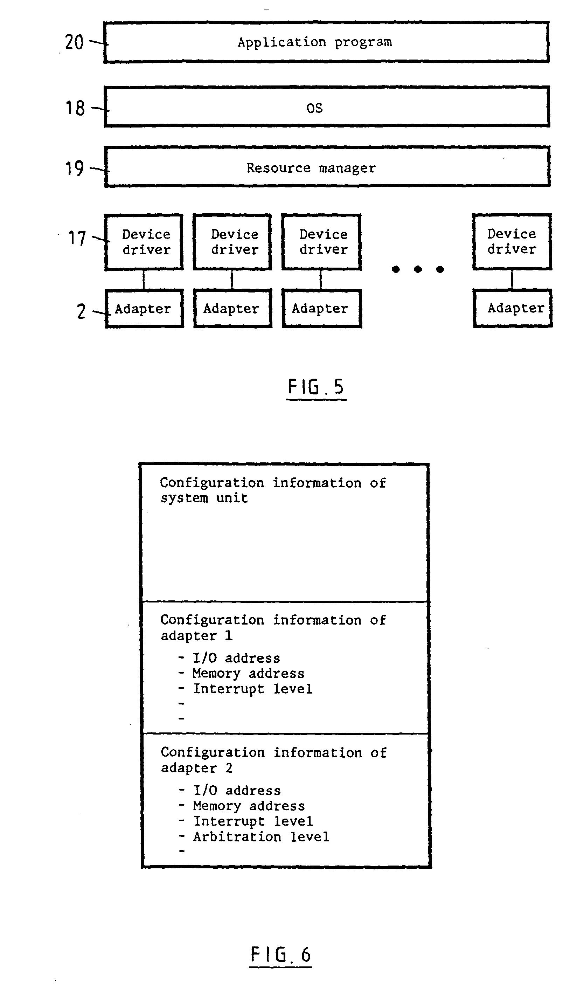

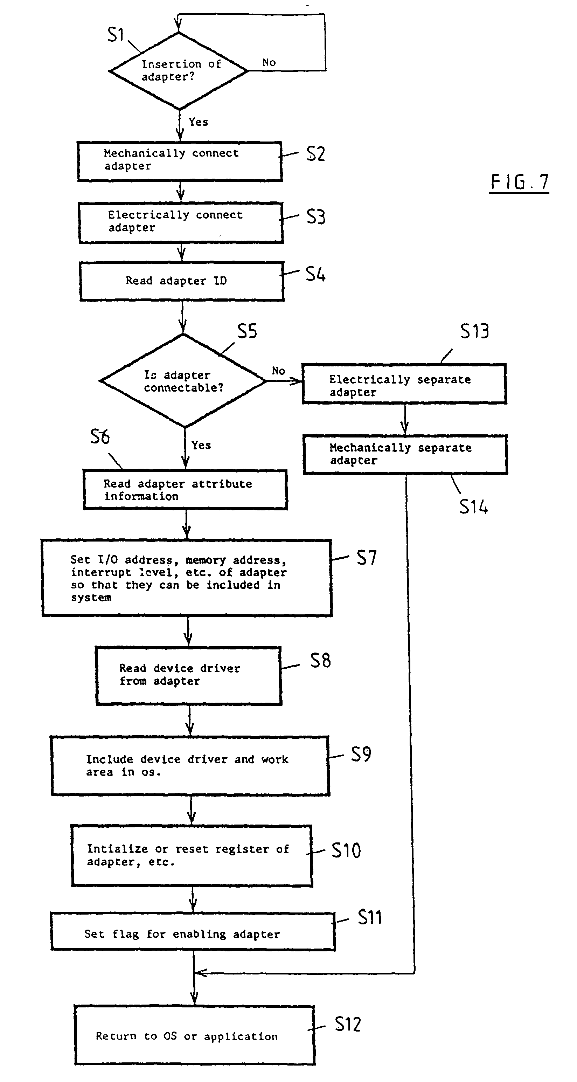

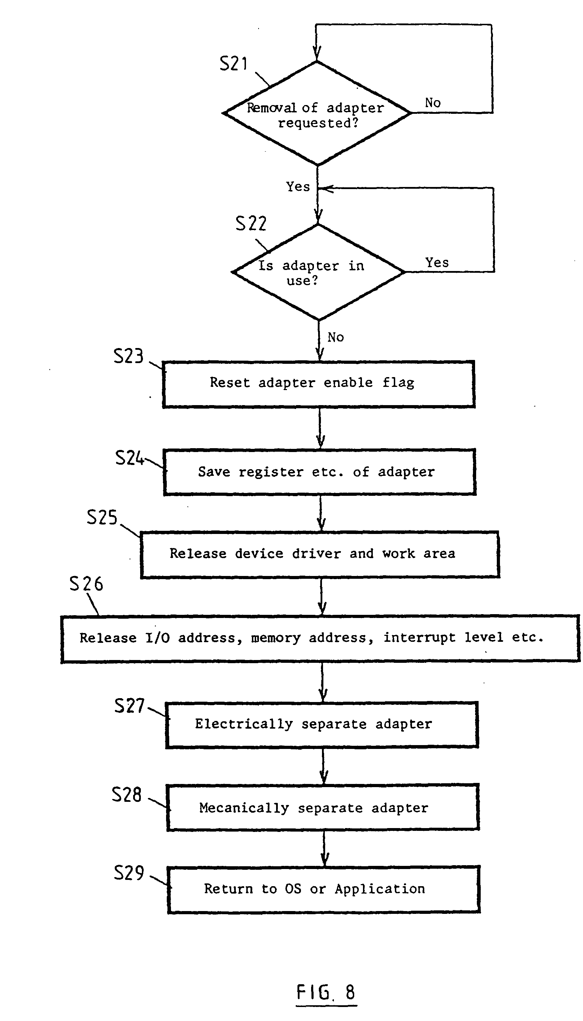

Figure 5 shows the software configuration of the portable computer 1. In the figure, device drivers 17 are prepared for the attached adapters 2. A resource manager 19 is provided between the device drivers 17 and an operating system 18. The resource manager 19 monitors insertion or removal of the adapter 2, and manages system configuration information in Figure 6 and the device drivers 17. The resource manager 19 will be explained later in detail with particular reference to Figures 7 and 8. An application program 20 is executed under the support of the operating system 18.

Next, the operation of the preferred embodiment will be explained. First, the operation when an adapter 2 is inserted will be explained by referring to Figure 7. In the figure, when the user inserts an adapter 2 into an empty slot, insertion of the adapter 2 is informed to the resource manager 19 through a means such as an interrupt (Step S1). In response to this, the resource manager 19 mechanically locks the adapter 2a with the adapter lock mechanism 10a (Step S2). At the same time, power is supplied to the adapter 2. After mechanical connection and supply of power, the adapter 2 is electrically connected to the portable computer 1 (on the signal level) (Step S3). This two stage connection on the power supply level and the signal level suppresses generation of noise or the like in the system unit when the adapter is connected. After mechanical and electrical connections, an adapter ID is read out from the adapter information storage 13 on the adapter 2 for checking whether or not the adapter can be connected to the system unit (Steps S4 and S5). If so, further necessary adapter attribute information is read out from the adapter attribute information storage 13 to perform necessary setting for the adapter 2 and installation of a necessary device driver 17 (Step S6). In the example of Figure 7, after the adapter attribute information is read out, the resource manager 19 sets up an adapter address, a memory address, and an interrupt level for the adapter 2 so that they do not compete with other resources (Step S7). Furthermore, a device driver 17 is read out and included in the OS 18, and a work area is set up (Steps S8 and S9). Then, the resource manager 19 initializes a register or the like for the adapter, or, if resetting is specified, reads and resets it, and transfers control to the OS 18 or the application program 20 before interrupt after setting an adapter enabling flag (Steps S10 - S12).

If the adapter 2 cannot be used, or if it cannot be used even if it is connected because of the system configuration (insufficient mounted memories, too small capacity of necessary file device, or no necessary input/output device), the resource manager 19 electrically and mechanically separates the adapter 2 once connected, and then the adapter 2 is finally disconnected (steps S13 and S14).

The operation when the adapter 2 is removed will now be explained with reference to Figure 8. In the figure, when the user presses the adapter removal button 12, its signal is transmitted to the resource manager 19 (Step S21). Although, in the preferred embodiment, the operation is initiated when the user presses the adapter removal button 12, the adapter can also be removed when the user issues an adapter removal request from a device such as a keyboard or a mouse, or when an application program issues an adapter removal request. After receiving the adapter removal request, the resource manager 19 checks whether or not the adapter 2 is in use. If so, the manager is caused to wait until completion of use (Step S22). In a case where it is specified to reset the adapter enabling flag and to reset the register or the like when the adapter is no longer in use, the resource manager stores the register in a nonvolatile memory or a secondary storage, and then releases the device driver, the work area for the device driver, and the like (Steps S23-S25). Furthermore, it releases the adapter address, memory address, interrupt level and the like which the adapter has used (Step S26), electrically and mechanically disconnects the adapter, and transfers control to the OS or application program (Steps 27 -29). This enables it to suppress generation of noise and the like on signal lines in the system when the adapter is removed. After mechanical removal, the lock of the adapter 2 is released so that the user can freely remove the adapter.

Modifications of the above-mentioned preferred embodiment will now be discussed.

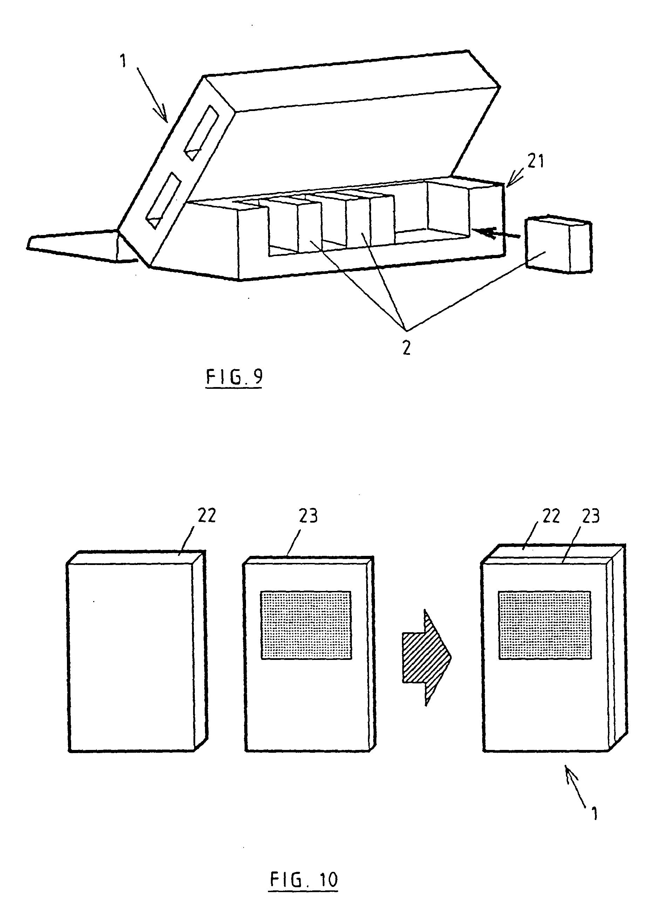

Figure 9 shows a modification in which an expansion unit 21 is connected to the portable computer 1, and a larger number of adapters 2 can be connected to the portable computer 1 by utilizing slots in the expansion unit. As discussed above, the resource manager 19 automatically reconfigures the system in response to detection of insertion or removal of an adapter 2 into the expansion unit 21.

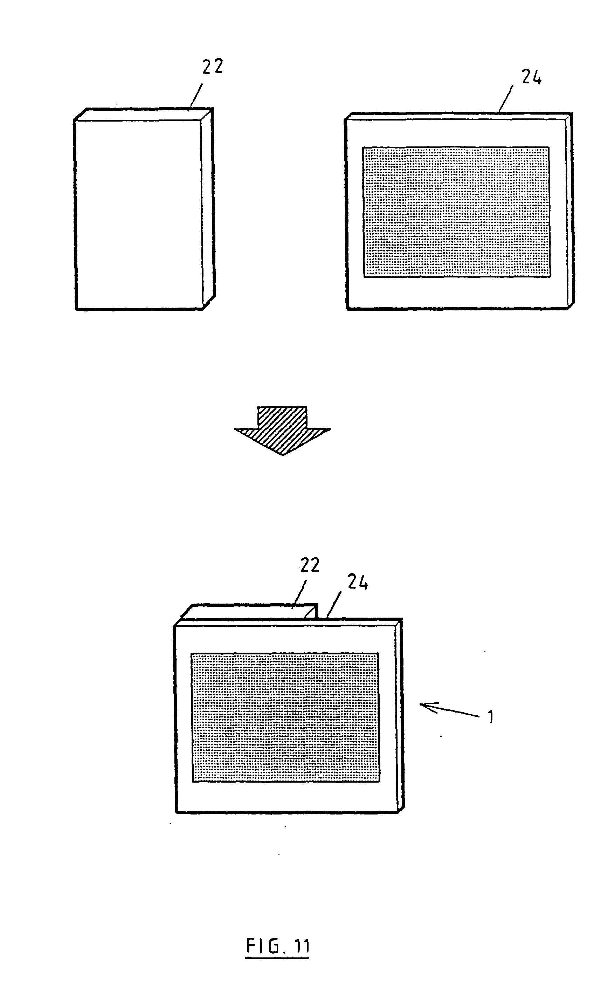

Figure 10 shows an example for constituting a portable computer 1 by combining a system unit 22 and a display unit 23. In this example, the system unit 22 is, for example, of A5 size, and the display unit 23 is also of A5 size. The display unit 23 contains the functions of the adapter of the previous example, and has a display section such as a liquid crystal display device, a display controller, and an attribute storage device. The system unit 22 reconfigures its configuration according to attachment of the display unit 23 by utilizing information in the attribute storage device. If a display unit 24 of A4 size shown in Figure 11 is used in the arrangement of Figure 10, the display unit 23 of A5 size of Figure 10 is removed, and the display unit 24 of A4 size of Figure 11 is attached in place. In response to this, the system unit 22 performs reconfiguration of the system for the A4-sized display unit 24. In this case, because the display controller section is provided in the display units 23 and 24 instead of in the system unit, it is easy to change the display unit from 23 to 24 or vice versa. The display units 23 and 24 may have tablet functions.

According to the preferred embodiment of the present invention, an adapter can be inserted or removed while keeping a computer system operational. In addition, handling of adapters becomes more straightforward because any type of adapter is automatically incorporated in the system for the user.

## Claims

1. A computer system (1) having one or more slots (21, 22) for receiving and holding one or more adapter cartridges (2), the system being characterised by:
each adapter cartridge being provided with a storage section (13) for storing attribute information,
communication means for exchanging predetermined information with said adapter cartridge in response to insertion or removal of said adapter cartridge to or from said slot; and
modifying means for modifying system configuration information of the system based on said attribute information stored in said adapter cartridge.

2. A computer system as claimed in Claim 1 further characterised by interrupt means for initiating said modifying means in response to insertion or removal of said adapter cartridge to or from said slot.

3. A computer system as claimed in Claim 1 or 2 having a user operable button (12) button for making requests to remove said adapter cartridge from said slot.

4. A computer system as claimed in any preceding claim, further comprising means for mechanically locking said adapter cartridge in said slot.

5. A computer system as claimed in any preceding claim, wherein said attribute information includes an identification number of said adapter, information on an available interrupt level, an arbitration level and a direct memory access channel, information on an adapter register which can be set by a program, address information on a memory in said adapter cartridge, information on a savable register for resume and restart, and information on one or more device drivers for said adapter cartridge.

6. A computer system as claimed in Claim 5, wherein said device drivers are installed from said adapter cartridge into the computer system unit.

7. A computer system as claimed in any preceding claim, wherein one of said adapter cartridges is a display unit.

8. A computer system as claimed in Claim 7, wherein said display unit has a display control section.

9. A computer system as claimed in any preceding claim, further comprising:
means for detecting insertion of said adapter cartridge into said slot;
means for mechanically locking said adapter cartridge in said slot in response to a detection signal from said detection means,
means for supplying power to said adapter cartridge in response to a detection signal from said detection means; and
means for connecting said adapter cartridge and said slot on a signal level in response to a detection signal from said detection means.

10. An expansion adapter for use in a computer system as claimed in any preceding claim.

11. A method for modifying system configuration information of a computer that has one or more slots (21, 22) or holding one or more adapter cartridges (2), the method being characterised by the steps of:
exchanging predetermined information with said adapter cartridge in response to insertion or removal of said adapter cartridge to or from said slot; and
modifying system configuration information of the system based on said attribute information stored in said adapter cartridge.

12. A method as claimed in Claim 11, further comprising the steps of:
detecting insertion of said adapter cartridge into said slot;
mechanically locking said adapter cartridge in said slot in response to such detection;
supplying power to said adapter cartridge in response to such detection; and
connecting said adapter cartridge and said slot on a signal level in response to such detection signal.

13. A method as claimed in Claim 11 or Claim 12, further comprising the steps of:
requesting removal of said adapter cartridge from said slot;
exchanging predetermined information with said adapter cartridge to modify system configuration information of said system;
shutting down communication between said adapter cartridge and said slot on a signal level in response to said request;
shutting down power supply to said adapter cartridge in response to said request; and
releasing mechanical locking of said adapter cartridge to said slot in response to said request.

## Patentansprüche

1. Ein Rechnersystem (1) mit einem oder mehreren Schlitzen (21, 22) zum Aufnehmen und Halten einer oder mehrerer Adapterpatronen (2), wobei das System dadurch gekennzeichnet ist, dass
jede Adapterpatrone versehen ist mit einem Speicherabschnitt (13) zum Abspeichern von Attribut- Informationen;
mit Kommunikationsmitteln zum Austauschen vorbestimmter Informationen mit der Adapterpatrone als Reaktion auf das Einsetzen bzw. Ausbauen der Adapterpatrone in bzw. aus dem Schlitz; und
mit Modifizierungsmitteln zum Modifizieren der Systemkonfigurationsinformationen des Systems auf der Grundlage der Attributinformationen, die in der Adapterpatrone gespeichert sind.

2. Ein Rechnersystem gemäß Anspruch 1, das ferner gekennzeichnet ist durch Unterbrechungsmittel zum Anfahren der Modifizierungsmittel als Reaktion auf das Einsetzen bzw. Herausziehen der Adapterpatrone in den bzw. aus dem Schlitz.

3. Ein Rechnersystem gemäß Anspruch 1 oder 2 mit einem durch den Anwender betätigbaren Druckknopf (12) zum Stellen von Anforderungen zum Herausziehen der Adapterpatrone aus dem Schlitz.

4. Ein Rechnersystem gemäß einem beliebigen der vorstehenden Ansprüche, das ferner Mittel zum mechanischen Verriegeln der Adapterpatrone im Schlitz aufweist.

5. Ein Rechnersystem gemäß einem beliebigen der vorstehenden Ansprüche, in dem die Attributinformationen eine Identifikationsnummer des Adapters, Informationen über eine verfügbare Unterbrechungsebene, eine Entscheidungshöhe und einen direkten Speicherzugriffskanal, Informationen über ein Adapterregister, das durch ein Programm eingestellt werden kann, Adresseninformationen über einen Speicher in der Adapterpatrone, Informationen über ein abspeicherbares Register für Zusammenfassung und Neustart, und Informationen über einen oder mehr Vorrichtungstreiber für die Adapterpatrone beinhaltet.

6. Ein Rechnersystem gemäß Anspruch 5, in dem die Vorrichtungstreiber aus der Adapterpatrone in die Rechnersystemeinheit installiert werden.

7. Ein Rechnersystem gemäß einem beliebigen der vorstehenden Ansprüche, in dem eine der Adapterpatronen eine Anzeigeeinheit ist.

8. Ein Rechnersystem gemäß Anspruch 7, in dem die Anzeigeeinheit einen Anzeigesteuerabschnitt aufweist.

9. Ein Rechnersystem gemäß einem beliebigen der vorstehenden Ansprüche, das ferner umfasst:
Mittel zum Erfassen des Einschiebens der Adapterpatrone in den Schlitz;
Mittel zum mechanischen Verriegeln der Adapterpatrone in dem Schlitz als Reaktion auf ein Erfassungssignal vom Erfassungsmittel;
Mittel zur Stromversorgung der Adapterpatrone als Reaktion auf ein Erfassungssignal vom Erfassungsmittel; und
Mittel zum Verbinden der Adapterpatrone und des Schlitzes auf einer Signalebene als Reaktion auf ein Erfassungssignal vom Erfassungsmittel.

10. Ein Erweiterungs-Adapter zum Anwenden in einem Rechnersystem gemäß einem beliebigen der vorstehenden Ansprüche.

11. Ein Verfahren zum Ändern einer Systemkonfigurationsinformation eines Rechners, der einen oder mehr Schlitze (21, 22) aufweist zum Halten von einem oder mehr Adapterpatronen (2), wobei das Verfahren durch folgende Schritte gekennzeichnet ist:
Austauschen vorgegebener Informationen mit der Adapterpatrone als Reaktion auf das Einsetzen bzw. Herausziehen der Adapterpatrone in den bzw. aus dem Schlitz; und
Modifizieren von Systemkonfigurationsinformationen des Systems auf der Grundlage der Attributinformationen, die in der Adapterpatrone gespeichert sind.

12. Ein Verfahren gemäß Anspruch 11, das ferner die folgenden Schritte enthält:
Erfassen des Einsetzens der Adapterpatrone in den Schlitz;
mechanisches Verriegeln der Adapterpatrone in dem Schlitz als Reaktion auf das Erfassen;
Einspeisen von Strom zu der Adapterpatrone als Reaktion auf das Erfassen; und
Verbinden der Adapterpatrone und des Schlitzes auf einer Signalebene als Reaktion auf dieses Erfassungssignal.

13. Ein Verfahren gemäß Anspruch 11 oder Anspruch 12, das ferner die folgenden Schritte umfasst:
Anfordern des Ausbaus der Adapterpatrone aus dem Schlitz;
Austausch vorgegebener Informationen mit der Adapterpatrone zum Modifizieren der Systemkonfigurationsinformationen des Systems;
Abschalten der Kommunikation zwischen der Adapterpatrone und dem Schlitz auf einer Signalhöhe als Reaktion auf diese Anforderung;
Abschalten der Stromzufuhr an die Adapterpatrone als Reaktion auf die Anforderung; und
Entriegeln der mechanischen Verriegelung der Adapterpatrone in dem Schlitz als Reaktion auf die Anforderung.

## Revendications

1. Système d'ordinateur (1) comportant un ou plusieurs emplacements (21, 22) destinés à recevoir et à contenir une ou plusieurs cartouches d'adaptateur (2), le système étant caractérisé en ce que :
chaque cartouche d'adaptateur est munie d'une section de mémorisation (13) destinée à mémoriser des informations d'attributs,
un moyen de communication destiné à échanger des informations prédéterminées avec ladite cartouche d'adaptateur en réponse à l'insertion ou à l'enlèvement de ladite cartouche d'adaptateur dans ledit emplacement ou depuis celui-ci, et
un moyen de modification destiné à modifier des informations de configuration de système du système sur la base desdites informations d'attributs mémorisées dans ladite cartouche d'adaptateur.

2. Système d'ordinateur selon la revendication 1, caractérisé en outre par un moyen d'interruption destiné à lancer ledit moyen de modification en réponse à l'insertion ou à l'enlèvement de ladite cartouche d'adaptateur dans ledit emplacement ou depuis celui-ci.

3. Système d'ordinateur selon la revendication 1 ou 2 comportant un bouton pouvant être actionné par l'utilisateur (12), bouton qui est destiné à effectuer des demandes pour retirer ladite cartouche d'adaptateur dudit emplacement.

4. Système d'ordinateur selon l'une quelconque des revendications précédentes, comprenant en outre un moyen destiné à verrouiller mécaniquement ladite cartouche d'adaptateur dans ledit emplacement.

5. Système informatique selon l'une quelconque des revendications précédentes, dans lequel lesdites informations d'attributs comprennent un numéro d'identification dudit adaptateur, des informations sur un niveau d'interruption disponible, un niveau d'arbitrage et un canal d'accès direct à la mémoire, des informations sur un registre d'adaptateur qui peut être initialisé par un programme, des informations d'adresses sur une mémoire dans ladite cartouche d'adaptateur, des informations sur un registre pouvant être sauvegardé en vue d'une reprise et d'un redémarrage, et des informations sur un ou plusieurs pilotes de dispositifs pour ladite cartouche d'adaptateur.

6. Système d'ordinateur selon la revendication 5, dans lequel lesdits pilotes de dispositif sont installés depuis ladite cartouche d'adaptateur dans l'unité du système d'ordinateur.

7. Système d'ordinateur selon l'une quelconque des revendications précédentes, dans lequel l'une desdites cartouches d'adaptateur est une unité d'affichage.

8. Système d'ordinateur selon la revendication 7, dans lequel ladite unité d'affichage comporte une section de commande d'affichage.

9. Système d'ordinateur selon l'une quelconque des revendications précédentes, comprenant en outre :
un moyen destiné à détecter l'insertion de ladite cartouche d'adaptateur dans ledit emplacement,
un moyen destiné à verrouiller mécaniquement ladite cartouche d'adaptateur dans ledit emplacement en réponse à un signal de détection provenant dudit moyen de détection,
un moyen destiné à fournir une alimentation à ladite cartouche d'adaptateur en réponse à un signal de détection provenant dudit moyen de détection, et
un moyen destiné à relier ladite cartouche d'adaptateur et ledit emplacement sur un niveau de signal en réponse à un signal de détection provenant dudit moyen de détection.

10. Adaptateur d'extension destiné à être utilisé dans un système d'ordinateur selon l'une quelconque des revendications précédentes.

11. Procédé destiné à modifier des informations de configuration de système d'un ordinateur qui comporte un ou plusieurs emplacements (21, 22) destinés à contenir une ou plusieurs cartouches d'adaptateur (2), le procédé étant caractérisé par les étapes consistant à :
échanger des informations prédéterminées avec ladite cartouche d'adaptateur en réponse à l'insertion ou à l'enlèvement de ladite cartouche d'adaptateur dans ledit emplacement ou depuis celui-ci, et
modifier des informations de configuration de système du système sur la base desdites informations d'attributs mémorisées dans ladite cartouche d'adaptateur.

12. Procédé selon la revendication 11, comprenant en outre les étapes consistant à :
détecter une insertion de ladite cartouche d'adaptateur dans ledit emplacement,
verrouiller mécaniquement ladite cartouche d'adaptateur dans ledit emplacement en réponse à une telle détection,
fournir une alimentation à ladite cartouche d'adaptateur en réponse à une telle détection, et
relier ladite cartouche d'adaptateur et ledit emplacement sur un niveau de signal en réponse à un tel signal de détection.

13. Procédé selon la revendication 11 ou la revendication 12, comprenant en outre les étapes consistant à :
demander l'enlèvement de ladite cartouche d'adaptateur depuis ledit emplacement,
échanger des informations prédéterminées avec ladite cartouche d'adaptateur afin de modifier les informations de configuration de système dudit système,
couper les communications entre ladite cartouche d'adaptateur et ledit emplacement sur un niveau de signal en réponse à ladite demande,
couper l'alimentation vers ladite cartouche d'adaptateur en réponse à ladite demande, et
libérer le verrouillage mécanique de ladite cartouche d'adaptateur avec ledit emplacement en réponse à ladite demande.
